# EUROPÄISCHE PATENTSCHRIFT

(11) **EP 3 135 708 B1**
(45) Veröffentlichungstag und Bekanntmachung des Hinweises auf die Patenterteilung: **03.01.2018**
(21) Anmeldenummer: 16182592.2
(22) Anmeldetag: 03.08.2016
(51) Int. Cl.: C08G 69/00, C08K 3/00, C08K 7/00, C08L 77/00

(54) **POLYAMIDZUSAMMENSETZUNGEN**
POLYAMIDE COMPOSITIONS
COMPOSITIONS DE POLYAMIDE

(30) Priorität: 26.08.2015 EP 15182481
(43) Veröffentlichungstag der Anmeldung: 01.03.2017
(73) Patentinhaber: LANXESS Deutschland GmbH, 50569 Köln (DE)
(72) Erfinder: ENDTNER, Jochen, 50679 Köln (DE); BIENMUELLER, Matthias, 47803 Krefeld (DE)

(56) Entgegenhaltungen:
- EP-A1- 2 468 809
- DE-U-202014 008 607
- US-A- 3 995 082
- "Stoffdaten SIKRON(R) Quartz", , 1. Oktober 2015 (2015-10-01), XP055234240, Gefunden im Internet: URL:http://www.quarzwerke.com/images/pdf/D atenblaetter/1205-SIKRON-Quarz-HPF-2.pdf [gefunden am 2015-12-07]

## Beschreibung

Die vorliegende Erfindung betrifft Zusammensetzungen auf Basis von Polyamid enthaltend Melamincyanurat, Nephelinsyenit und Glasfasern.

### Stand der Technik

Zur Modifizierung des Aufbereitungs-, Verarbeitungs- und Einsatzverhaltens sind Kunststoffe größtenteils mit Hilfsstoffen sowie mit Füll- und Verstärkungsstoffen versehen. Letztere verbessern Eigenschaften wie Steifigkeit, Festigkeit, Wärmestandfestigkeit, Maßhaltigkeit und verringern die thermische Ausdehnung von Erzeugnissen auf Basis von Kunststoffen.

Von besonderer Bedeutung für Kunststoff Zusammensetzungen sind Füll- und Verstärkungsstoffe aus Mineralien oder Glas, insbesondere Borsilikatglas oder Silikatglas, das in verschiedensten Formen, beispielsweise in Form von Glasfasern, Glasflocken oder auch in Form von Bläh- bzw. Schaumglas eingesetzt wird. Füll- und Verstärkungsstoffe haben einen wesentlichen Einfluss auf die Wärmeformbeständigkeit von Kunststoffen. So werden z. B. beim Einsatz von faserförmigen Füllstoffen mit entsprechend hohem Längen- zu Durchmesserverhältnis sehr gute Wärmeformbeständigkeiten erzielt. Allerdings führt die anisotrope Geometrie einer Faser bei der Verarbeitung zu einer Ausrichtung der Fasern in Fließrichtung und damit einhergehend zu einer anisotropen Schwindung während des Verarbeitens, was in der Folge zu unerwünschtem Verzug in den Erzeugnissen führt. Auch führt der mit den Fasern einhergehende "Dochteffekt" zu einer Verschlechterung der Selbstverlöschungseigenschaften dieser Erzeugnisse, wie sie beispielsweise im Glühdrahttest nach IEC 60695-2-12 (GWFI) von Bedeutung sind. Um auch mit faserförmigen Füllstoffen, wie z. B. Glasfasern, eine ausreichende Flammwidrigkeit von Kunststoff basierten Erzeugnissen sicherstellen zu können, muss man in der Regel Flammschutzmittel auf Halogen- oder Phosphorbasis einsetzen. Halogen basierte Flammschutzmittel stehen wegen ihrer Anreicherung in der Umwelt in der öffentlichen Diskussion. Phosphor basierte Flammschutzmittel werden gerne wegen der energieintensiven Herstellung vermieden. Zudem besteht bei Phosphor haltigen Flammschutzmitteln das Risiko von korrosiven Ablagerungen an elektrischen Kontakten, wenn es sich bei dem Erzeugnis um ein Elektrobauteil oder Elektronikbauteil handelt.

Bei Verwendung nicht-faserförmiger Füllstoffe, insbesondere Talk, Tonmineralien, Glimmer, Bläh- oder Schaumglas, erhält man zwar in Erzeugnissen eine isotrope Schwindung, allerdings weisen die dafür einzusetzenden Formmassen und die daraus herzustellenden Erzeugnisse dann häufig ungenügende Wärmeformbeständigkeiten (<135°C) oder unzureichende Selbstverlöschungseigenschaften in der GWFI-Prüfung bei dünneren Wandstärken (< 1 mm) auf.

EP 2 468 810 A1 beschreibt im Beispiel 3 eine Polyamid basierte Zusammensetzung, die neben Melamincyanurat gemahlenes Glas und auch gemahlene Schnittglasfasern enthält. Nachteilig an dieser Zusammensetzung ist ihre schlechte Wärmeformbeständigkeit und damit einhergehend eine stark eingeschränkte Anwendbarkeit in elektrischen Bauteilen, wie z. B. Leitungsschutzschaltern. Hinzu kommt, dass die dort eingesetzten gemahlenen Glasarten zur Herstellung des Glases einen sehr energieintensiven Arbeitsschritt durchlaufen müssen

CN 103 013 104 A beschreibt flammgeschützte Nylon-6 basierte Zusammensetzungen auf Basis halogenfreier Flammschutzmittel mit Melamincyanurat und Talk als anorganischem Füllstoff.

DE 20 2014 008 6907 U1 beschreibt eine Polyamid basierte Zusammensetzung, die neben Melamincyanurat Quarzmehl und auch geschnittene Langglasfasern enthält. Nachteilig an dieser Zusammensetzung ist, dass der dort eingesetzte Quarz aufgrund seiner hohen Härte [Mohshärte 7 nach https://de.wikipedia.org/wiki/Quarz] nicht nur zu erhöhter Abrasion in technischen Anlagen, sondern auch zu einer Schädigung der Glasfasern führt. Insbesondere die Schädigung der Glasfasern kann zu einer Beeinträchtigung der mechanischen Eigenschaften und der Wärmeformbeständigkeit daraus herzustellender Erzeugnisse beitragen.

Gute Wärmeformbeständigkeit und gute mechanische Eigenschaften bei gleichzeitig isotropem Schwindungsverhalten und gute Selbstverlöschungseigenschaften im GWFI-Test sind aber eine wichtige Voraussetzung für die Anwendung Polyamid basierter Zusammensetzungen in komplex aufgebauten elektronischen Bauteilen, insbesondere in FI- Schaltern und in Leitungsschutzschaltern (FI = Fehlerstromschutzschalter).

Gemäß "http://de.wikipedia.org/wiki/Leitungsschutzschalter" ist ein Leitungsschutzschalter, kurz LS-Schalter, umgangssprachlich auch Sicherungsautomat oder kurz Sicherung genannt, eine Überstromschutzeinrichtung in der Elektroinstallation und wird in Niederspannungsnetzen eingesetzt. Als FI-Schalter bezeichnet man Fehlerstromschutzschalter (siehe: http://de.wikipedia.org/wiki/Fehlerstromschutzschalter).

Aufgabe der vorliegenden Erfindung war es daher, Polyamid basierte Zusammensetzungen zur Verfügung zu stellen, die zur Herstellung von Erzeugnissen für die Elektroindustrie geeignet sind, wobei sich diese Erzeugnisse durch hohe Wärmeformbeständigkeit bei gleichzeitig geringem isotropem Schwindungsverhalten, durch gute Selbstverlöschungseigenschaften im Glühdrahttest nach IEC60695-2-12 auch bei dünnen Wandstärken um 0,8 mm auszeichnen und dabei gegenüber dem Stand der Technik mit Rohstoffen erhalten werden können, die einen alveolengängigen, kristallinen Siliziumdioxid-Anteil kleiner als 1% aufweisen, eine Mohshärte kleiner als 7 haben und gegenüber gemahlenem Glas ohne einen energieintensiven Aufschmelzprozess zugänglich sind.

Gemäß "http://de.wikipedia.org/wiki/W%C3%A4rmeformbest%C3%A4ndigkeit" ist die Wärmeformbeständigkeit ein Maß für die Temperaturbelastbarkeit von Kunststoffen. Wegen deren viskoelastischen Materialverhaltens gibt es für Kunststoffe keine streng definierte obere Einsatztemperatur, stattdessen wird eine Ersatzgröße unter definierter Last bestimmt. Dazu stehen zwei genormte Methoden zur Verfügung, die Methode der Wärmeformbeständigkeitstemperatur (HDT) und die Vicat-Erweichungstemperatur (VST).

Die in DIN EN ISO 75-1,-2,-3 (Vorläufer: DIN 53461) beschriebene Methode zur Bestimmung der Wärmeformbeständigkeitstemperatur verwendet Standardprobekörper mit rechteckigem Querschnitt, die bevorzugt flachkant einer Dreipunktbiegung bei konstanter Last ausgesetzt werden. Je nach Probekörperhöhe wird dabei zur Erzielung einer sogenannten *Randfaserspannung σ*_{f} von 1,80 (Methode A), 0,45 (Methode B) oder 8,00 N/mm² (Methode C) durch Gewichtsstücke oder/und Federn eine Kraft F = 2σ_{f}bh²/3L aufgebracht, wobei b für die Probenbreite, h für die Probenhöhe und L für den Auflagerabstand stehen. Anschließend werden die belasteten Proben einer Erwärmung mit konstanter Heizrate von 120 K/h (oder 50 K/h) ausgesetzt. Erreicht dabei die Durchbiegung der Probe eine Randfaserdehnung von 0,2 %, so ist die zugehörige Temperatur die Wärmeformbeständigkeitstemperatur HDT (engl. *heat deflection temperature* oder *heat distortion temperature*).

Die Vicat-Erweichungstemperatur (VST = *Vicat softening temperature*) nach DIN EN ISO 306 (Vorläufer: DIN 53460) wird mit einer Nadel (mit kreisrunder Fläche von 1 mm²) gemessen. Diese ist mit einer Prüfkraft von 10 N (Prüfkraft A) oder 50 N (Prüfkraft B) belastet. Der Probekörper mit einer zulässigen Dicke von 3 bis 6,4 mm wird einer definierten Heizrate von 50 bzw. 120 K/h ausgesetzt. Die VST ist erreicht, wenn der Eindringkörper eine Eindringtiefe von 1 mm erreicht. Die Prüfung ist nach Norm nur bei Thermoplasten anzuwenden und gibt einen Aufschluss über die praktische Dauereinsatzgrenze, welche bei circa 15 K unter der Vicattemperatur liegt. Durch Variation der Randbedingungen ergeben sich vier Parameterkombinationen:
- VST/A50
- VST/A120
- VST/B50 (bevorzugte Methode für vergleichende Prüfungen (ISO 10350-1)
- VST/B120.

Gemäß "http://de.wikipedia.org/wiki/Schwindung#Schwindung_bei_Gie.C3.9Fharzen" ist Schwindung die Volumenänderung eines Materials oder Werkstücks, ohne dass Material entfernt oder Druck ausgeübt wird. Schwindung findet durch Trocknung, Abkühlung oder chemische bzw. physikalische Umbaumechanismen im Material statt. Eine geringe Schwindung bei Gießharzen auf Basis von Thermoplasten ist ein Qualitätskriterium, da ansonsten Einbauten unter Druckspannung geraten können und zu anderen zu benetzenden Teilen Spalte entstehen können, wenn die Haftung nicht ausreicht. Bei Spritzgusserzeugnissen der Elektrotechnik/Elektronik kann die Schwindung zum Eindringen von Feuchtigkeit und zu verringerter Spannungsfestigkeit führen. Unter isotroper Schwindung versteht der Fachmann eine Schwindung, die in alle Raumrichtungen hin gleich ist. Die Prüfung des Schwindungsverhaltens erfolgt gemäß DIN EN ISO 294-4, so auch im Rahmen der vorliegenden Erfindung.

Die energieintensive Herstellung von Glas aus einem Gemenge bestehend aus Siliziumoxid (SiO₂), Natriumoxid (Na₂O) und Calciumoxid sowie gegebenenfalls weiteren Zuschlagstoffen ist in http://de.wikipedia.org/wiki/Glas erläutert. Dabei muss das Gemenge z. B. in kontinuierlich arbeitenden Öfen bei Temperaturen von ca. 1400°C und mehr in eine homogene Glasschmelze überführt werden. Die notwendige Energie zum Erschmelzen des Glases muss dabei durch fossile Brennstoffe oder elektrische Energie erbracht werden.

Es wurde nun überraschend gefunden, dass Zusammensetzungen auf Basis von Polyamid beim Einsatz von Nephelinsyenit in der unten näher beschriebenen Form in Kombination mit Glasfasern, Melamincyanurat und gegebenenfalls Titandioxid zu Elektro- bzw. Elektronikartikeln mit hervorragenden Eigenschaften in Bezug auf Wärmeformbeständigkeit, Flammwidrigkeit im Glühdrahttest nach IEC60695-2-12 und isotropem Schwindungsverhalten führen, ohne dass das Nephelinsyenit, einem energieintensiven Aufschmelzprozess unterworfen werden muss.

Gegenstand der Erfindung sind somit Zusammensetzungen, enthaltend
A) Polyamid, vorzugsweise teilkristalline Polyamide, besonders bevorzugt Polyamid 6 oder Polyamid 66,
B) Nephelinsyenit
C) Glasfasern und
D) Melamincyanurat.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Zur Klarstellung sei ferner angemerkt, dass gemäß "http://de.wikipedia.ora/wiki/Faser-Kunststoff-Verbund" Fasern wie folgt unterschieden werden:
- geschnittene Fasern, auch als Kurzfasern bezeichnet, mit einer Länge im Bereich von 0,1 bis 1 mm,
- Langfasern mit einer Länge im Bereich von 1 bis 50 mm,
- Endlosfasern mit einer Länge L > 50 mm und
- gemahlene Fasern mit einer Länge nach der Vermahlung typischerweise im Bereich von 70 bis 200 µm.

Die im Rahmen der vorliegenden Erfindung angegebenen Längen sind Ausgangslängen. Sie beziehen sich also auf Edukte, insbesondere Fasern, vor jeglicher Verarbeitung, beispielsweise in einem Mischwerkzeug. Im Rahmen der Verarbeitung der erfindungsgemäßen Zusammensetzungen zu Formmassen werden in einem Mischwerkzeug, vorzugsweise in einem Extruder, die erfindungsgemäß einzusetzenden Komponenten B) und C) sowie gegebenenfalls weitere Füllstoffe der Komponente K) verschiedensten Kräften ausgesetzt, wodurch sich das obige Längenprofil von Fasern zu kürzeren Längen bis hin zu Längen im Micrometerbereich verschieben kann. So können verarbeitungsbedingt die erfindungsgemäß als Komponente C) einzusetzenden Glasfasern, vorzugsweise die erfindungsgemäß einzusetzenden Langglasfasern, in den erfindungsgemäßen Erzeugnissen schließlich Faserlängen im Bereich von 0,1 bis 1mm, ja sogar bis hinab im µm-Bereich, aufweisen. Angegebene Normen gelten in ihrer zum Anmeldetag dieser Anmeldung gültigen Fassung.

Bevorzugter Gegenstand der Erfindung sind ferner Zusammensetzungen, enthaltend
100 Gewichtsteile der Komponente A),
10 bis 75 Gewichtsteile der Komponente B),
2 bis 12 Gewichtsteile der Komponente C) und
0,1 bis 40 Gewichtsteile der Komponente D).

Die Zubereitung der erfindungsgemäßen Zusammensetzungen für eine weitere Nutzung erfolgt durch Mischen der als Edukte einzusetzenden Komponenten A) bis D) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten A) bis D) bestehen, oder aber zusätzlich zu den Komponenten A) bis D) noch weitere Komponenten enthalten, vorzugsweise wenigstens eine der unten aufgeführten Komponenten E) bis L).

In einer Ausführungsform enthalten die Zusammensetzungen zusätzlich zu den Komponenten A), B), C) und D) noch **E) Titandioxid,** vorzugsweise in Mengen im Bereich von 0,01 bis 30 Gewichtsteilen, bezogen auf 100 Gewichtsteile der Komponente A).

In einer Ausführungsform enthalten die Zusammensetzungen zusätzlich zu den Komponenten A) bis E) oder anstelle von E) noch **F) wenigstens ein Gleit- und/oder Entformungsmittel,** vorzugsweise in Mengen im Bereich von 0,01 bis 5 Gewichtsteilen, bezogen auf 100 Gewichtsteile der Komponente A).

In einer Ausführungsform enthalten die Zusammensetzungen zusätzlich zu den Komponenten A) bis F) oder anstelle von E) und/oder F) noch **G) wenigstens einen Laserabsorber** ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon, vorzugsweise in Mengen im Bereich von 0,01 bis 10 Gewichtsteilen, bezogen auf 100 Gewichtsteile der Komponente A).

In einer Ausführungsform enthalten die Zusammensetzungen zusätzlich zu den Komponenten A) bis G) oder anstelle von E) und/oder F) und/oder G) noch **H) wenigstens ein weiteres zum Melamincyanurat (= Komponente D)) unterschiedliches Flammschutzmittel,** vorzugsweise in Mengen im Bereich von 0,01 bis 60 Gewichtsteilen, bezogen auf 100 Gewichtsteile der Komponente A). Vorzugsweise werden als Komponente H) halogenfreie und/oder phosphorfreie Flammschutzmittel eingesetzt.

In einer Ausführungsform enthalten die Zusammensetzungen zusätzlich zu den Komponenten A) bis H) oder anstelle von E) und/oder F) und/oder G) und/oder H) noch **K) wenigstens einen von den Komponenten B) und C) verschiedenen Füllstoff,** vorzugsweise in Mengen im Bereich von 0,01 bis 60 Gewichtsteilen, bezogen auf 100 Gewichtsteile der Komponente A).

In einer Ausführungsform enthalten die Zusammensetzungen zusätzlich zu den Komponenten A) bis K) oder anstelle der Komponenten E) und/oder F) und/oder G) und/oder H) und/oder K) noch **L) wenigstens ein weiteres von den Komponenten D) bis K) unterschiedliches Additiv,** vorzugsweise in Mengen im Bereich von 0,01 bis 30 Gewichtsteilen, bezogen auf 100 Gewichtsteile der Komponente A).

Insbesondere bevorzugt sind Zusammensetzungen enthaltend Polyamid 6 als Komponente A), Nephelinsyenit als Komponente B), Glasfasern als Komponente C), vorzugsweise Glasfasern aus E-Glas, besonders bevorzugt Glasfasern mit einem mittleren Faserdurchmesser im Bereich von 10 µm bis 12 µm und /oder einer mittleren Faserlänge im Bereich von 4 bis 5 mm, Melamincyanurat als Komponente D), Ethylen-bis-stearylamid als Komponente H) und 3,3'-Bis(3,5-di-tert-butyl-4-hydroxyphenyl)-N,N'-hexamethylendipropionamid als Komponente L).

### Komponente A)

Als Komponente A) enthalten die Zusammensetzungen Polyamid. Bevorzugt einzusetzende Polyamide sind teilkristalline Polyamide. Besonders bevorzugt werden PA 6 [CAS Nr. 25038-54-4] oder PA 66 [CAS Nr. 32131-17-2] eingesetzt. Copolyamide auf Basis von PA 6 und/oder PA 66 werden vom Gegenstand der vorliegenden Erfindung mit umfasst.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α ,ω-Aminocarbonsäure bzw. von dem davon abgeleiteten Lactam, im Falle des PA 6 also dem ε-caprolactam, ausgegangen worden ist; im Übrigen sei verwiesen auf H. Domininghaus, Die Kunststoffe und ihre Eigenschaften, Seiten 272 ff., VDI-Verlag, 1976.

Bevorzugt besitzt das als Komponente A) einzusetzende Polyamid 6 oder das Polyamid 66 eine Viskositätszahl bestimmt in einer 0,5 gew.-%igen Lösung in 96 gew.-%iger Schwefelsäure bei 25 °C gemäß ISO 307 im Bereich von 80 bis 180 ml/g.

Besonders bevorzugt besitzt das als Komponente A) einzusetzende Polyamid 6 nach der genannten Norm und nach dem oben genannten Verfahren eine Viskositätszahl im Bereich von 85 bis 160 ml/g, ganz besonders bevorzugt eine Viskositätszahl im Bereich von 90 bis 140 ml/g.

Das als Komponente A) einzusetzende Polyamid 66 besitzt nach dem oben genannten Verfahren besonders bevorzugt eine Viskositätszahl im Bereich von 110 bis 170 ml/g, ganz besonders bevorzugt eine Viskositätszahl im Bereich von 130 bis 160 ml/g.

Unter thermoplastischen Polyamiden werden in Anlehnung an Hans Domininghaus in "Die Kunststoffe und ihre Eigenschaften", 5. Auflage (1998), S. 14, Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind.

Die erfindungsgemäß als Komponente A) einzusetzenden Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen ausgerüstet werden. Geeignet sind auch Blends mit Anteilen von anderen Polymeren, bevorzugt von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. Im Rahmen der vorliegenden Erfindung wird auch die hydrolytische Polymerisation von Lactamen als Polykondensation verstanden.

Erfindungsgemäß als Komponente A) bevorzugt einzusetzende Polyamide oder Copolyamide sind solche, die ausgehend von Diaminen und Dicarbonsäuren und/oder Lactamen mit wenigstens 5 Ringgliedern oder entsprechenden Aminosäuren hergestellt werden. Als Edukte kommen bevorzugt aliphatische Dicarbonsäuren, besonders bevorzugt Adipinsäure, aliphatische Diamine, besonders bevorzugt Hexamethylendiamin, Aminocarbonsäuren, insbesondere Aminocapronsäure, oder die entsprechenden Lactame in Betracht. Copolyamide aus mehreren der genannten Monomeren sind eingeschlossen.

Bei den als Komponente A) bevorzugt einzusetzenden PA 6 und PA 66 handelt es sich um teilkristalline Polyamide. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

Das als Komponente A) insbesondere bevorzugt einzusetzende Polyamid 6 ist erhältlich aus ε-caprolactam. Das als Komponente A) bevorzugt einzusetzende Polyamid 66 ist erhältlich aus Hexamethylendiamin und Adipinsäure.

Bevorzugt sind weiterhin die meisten auf PA 6, PA 66 bzw. auf deren Copolyamiden basierende Compounds, bei denen auf eine Polyamidgruppe in der Polymerkette 3 bis 11 Methylengruppen, insbesondere ganz besonders bevorzugt 4 bis 6 Methylengruppen kommen.

### Komponente B)

Als Komponente B) enthalten die Zusammensetzungen Nephelinsyenit [CAS Nr. 37244-96-5]. Nephelinsyenit ist ein natürlich vorkommendes Gestein, das hauptsächlich aus den Mineralen Albit (Na[AlSi₃O₈]), Mikroklin (K[AlSi₃O₈]) und Nephelin (Na,K)[AlSiO₄] (CAS Nr. 1302-72-3) besteht. Nephelinsyenit ist inert und zeichnet sich durch eine Mohs Härte von 6,5, sowie einem hohen Weißgrad und eine hervorragende Transparenz aus. Wie für natürlich vorkommendes Gestein üblich, kann das erfindungsgemäß einzusetzende Nephelinsyenit mit anderen Mineralien verunreinigt sein. Eine genaue Beschreibung des erfindungsgemäß als Komponente B) einzusetzenden Nephelinsyenits sowie darin übliche Verunreinigungen ist beispielsweise in "https://en.wikipedia.org/wiki/Nepheline_syenite" beschrieben. Im Handel wird Nephelinsyenit beispielsweise angeboten als Nephelinsyenit 334 mit der Molekularformel 1 K₂O x 3 Na₂O x 4 Al₂O₃ x 8 SiO₂ (Carl Jäger Tonindustriebedarf GmbH, Deutschland) oder als Nephelinsyenit 550 mit der Molekular-Formel 0,56 Na₂O x 0,44 K₂O x 1 Al₂O₃ x 4 SiO₂ (Bodmer Ton AG, Einsiedeln, Schweiz).

Das erfindungsgemäß einzusetzende Nephelinsyenit wird bevorzugt aus natürlichen Vorkommen durch Mahlung und nachfolgender Sichtung und/oder Siebung auf die gewünschte Teilchengröße gebracht. Bevorzugter Gegenstand der Erfindung sind Zusammensetzungen enthaltend als Komponente B) Nephelinsyenit mit einem d95 im Bereich von 1 bis 150 µm, bevorzugt im Bereich von 10 bis 100 µm, besonders bevorzugt im Bereich von 12 bis 70 µm, ganz besonders bevorzugt im Bereich von 15 bis 35 µm bestimmt durch Laserdiffraktometrie gemäß der Norm ISO 13320.

Besonders bevorzugt wird Nephelinsyenit eingesetzt, das zusätzlich zum oben genannten d95 einen d50 im Bereich von 1 bis 35 µm, bevorzugt im Bereich von 2 bis 20 µm, besonders bevorzugt im Bereich von 2,5 bis 15 µm, ganz besonders bevorzugt im Bereich von 3 bis 10 µm aufweist, wobei die Teilchengrößenbestimmung durch Laserdiffraktometrie gemäß der Norm ISO 13320 erfolgt. Zur Klarstellung sei angemerkt, dass im Rahmen der vorliegenden Anmeldung die Norm ISO 13320 in der zum Anmeldetag der vorliegenden Erfindung gültigen Version zugrunde gelegt wird.

Bezüglich der d50 und d95-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d50-Wert diejenige Partikelgröße ist, unterhalb derer 50 % der Partikelmenge liegen (Medianwert) und der d95-Wert diejenige Partikelgröße ist, unterhalb derer 95 % der Partikelmenge liegen. Die Angaben der Teilchengrößenverteilung bzw. der Teilchengrößen beziehen sich hierbei auf sogenannte oberflächenbasierte Teilchengrößen, jeweils vor Einarbeitung in die thermoplastische Formmasse. Zur Teilchengrößenbestimmung durch Laserdiffraktometrie siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16.

Bevorzugt ist das Nephelinsyenit von partikelförmiger, nicht zylindrischer Gestalt und hat ein Längen- zu Dickenverhältnis kleiner 5, bevorzugt kleiner als 3, besonders bevorzugt kleiner 2. Der Wert Null ist selbstverständlich ausgeschlossen.

Das Mahlen des Nephelinsyenits erfolgt vorzugsweise in einer Mühle, besonders bevorzugt in einer Kugelmühle, ganz besonders bevorzugt in einer Kugelmühle, die zur Vermeidung von Eisenkontaminationen mit Keramik- oder Gummi ausgekleidet ist.

Die Sichtung des gemahlenen Nephelinsyenits erfolgt bevorzugt in Windsichtern, wobei die Klassierung ein- oder mehrstufig erfolgen kann.

Die Kontrolle der erfindungsgemäß einzusetzenden Teilchengrößenverteilung kann dabei je nach gewünschten Teilchengrößen mittels Siebanalysen oder mittels Laserstrahltechnik erfolgen.

Im Rahmen der vorliegenden Erfindung werden die Begriffe Nephelinsyenit, Nephelinsyenit-Mehl und gemahlenes Nephelinsyenit synonym verwendet.

Als Ausgangsmaterial für das Vermahlen kommen prinzipiell alle natürlich vorkommenden Nephelinsyenite in Betracht.

Vorzugsweise ist das erfindungsgemäß einzusetzende Nephelinsyenit mit einer Oberflächenmodifizierung oder Schlichte auf Basis von Aminoalkyltrialkoxysilan versehen. In alternativen oder bevorzugten Ausführungsformen kann das Nephelinsyenit mit zusätzlicher Oberflächenmodifizierung oder Schlichte auf Silan- bzw. Siloxanbasis versehen sein. Bevorzugte Silane bzw. Siloxane sind Glycidyl-, Carboxyl, Alkenyl-, Acryloxyalkyl- und/oder Methacryloxyalkyl- funktionalisierte Trialkoxysilane oder deren wässrige Hydrolysate sowie Kombinationen daraus.

Ganz besonders bevorzugte Oberflächenmodifzierungen sind auf Basis von Aminoalkyltrialkoxysilanen, insbesondere Aminopropyltrimethoxysilan, Aminobutyltrimethoxysilan, Aminopropyltriethoxysilan, Aminobutyltriethoxysilan oder deren wässrige Hydrolysate, wobei Aminopropyltriethoxysilan insbesondere ganz besonders bevorzugt ist.

Die Aminoalkyltrialkoxysilane werden bevorzugt in Mengen im Bereich von 0,01 Gew.-% bis 1,5 Gew.-%, besonders bevorzugt in Mengen im Bereich von 0,05 Gew.-% bis 1,0 Gew.-% und ganz besonders bevorzugt in Mengen im Bereich von 0,1 Gew.-% bis 0,5 Gew.-% bezogen auf das als Komponente B) einzusetzende Nephelinsyenit zur Oberflächenbeschichtung eingesetzt.

Das für die Vermahlung einzusetzende Nephelinsyenit kann bereits mit Oberflächenmodifizierung oder Schlichte behandelt sein. Ebenso kann das Nephelinsyenit erst nach der Vermahlung mit Oberflächenmodifizierung oder Schlichte behandelt werden.

Als erfindungsgemäß besonders geeignetes Nephelinsyenit kann Minex® S-6 von der Fa. Sibelco Speciality Minerals Europe, Rud, Norwegen eingesetzt werden, ein durch Mahlung von Nephelinsyenit-Gestein und nachfolgender Sichtung erhaltenes Nephelinsyenit mit einem d95 von 22 µm, einem d50 von 7,8 µm und einer Mohs-Härte von 6.

Erfindungsgemäß ebenfalls geeignet ist Treminex® 958-600 mit einem d95 von 10µm, einem d50 von 3µm und einer Mohs-Härte von 6, das bei der Fa. Quarzwerke GmbH, Frechen, Deutschland, erhältlich ist.

Das Nephelinsyenit kann verarbeitungsbedingt in den aus den erfindungsgemäßen Zusammensetzungen herzustellenden und ebenfalls erfindungsgemäßen Formmassen und daraus wiederum herzustellenden Erzeugnissen oder Formkörpern in diesen einen kleineren d95- bzw. d50-Wert aufweisen.

### Komponente C)

Bevorzugter Gegenstand der Erfindung sind ferner Zusammensetzungen enthaltend als Komponente C) Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm.

Die Längenangaben sind Ausgangslängen und definieren die Länge der Langglasfasern vor jeglicher Verarbeitung. Während der Aufbereitung und Formgebung faserverstärkter Formmassen bzw. Kunststoffe findet in aller Regel eine Fasereinkürzung statt, die sich auf verschiedene Ursachen zurückführen lässt (Turkovich et. al., Fibre Fracture in Reinforced Thermoplastic Processing, Polym. Eng. and Sci. 23, 1983, 743 - 749). Die als Komponente C) einzusetzenden Glasfasern, vorzugsweise Langglasfasern, können deshalb verarbeitungsbedingt in den aus den erfindungsgemäßen Zusammensetzungen herzustellenden Formmassen oder Erzeugnissen einen kleineren d97- bzw. d50-Wert aufweisen. So liegt der arithmetische Mittelwert der Langglasfaserlänge nach der Verarbeitung häufig nur noch im Bereich von 150 µm bis 300 µm. Die Faserlängenbestimmung erfolgt bildanalytisch, vorzugsweise mittels REM-Untersuchung. Im Falle einer Faserlängenbestimmung in erfindungsgemäßen Erzeugnissen werden die Fasern zuvor mittels Soxhlet-Extraktion aus den sie enthaltenden Verbundkunststoffen gelöst und dann einer REM-Untersuchung unterzogen.

Bevorzugt als Komponente C) einzusetzende Glasfasern haben einen Faserdurchmesser im Bereich von 7 bis 18 µm, besonders bevorzugt im Bereich von 9 bis 15 µm. Querschnittsfläche bzw. Faserdurchmesser werden im Rahmen der vorliegenden Erfindung mittels wenigstens eines optischen Verfahrens gemäß DIN 65571 bestimmt. Optische Verfahren sind a) Lichtmikroskop und Mikrometerokular (Distanzmessung Zylinderdurchmesser), b) Lichtmikroskop und Digitalkamera mit anschließender Planimetrie (Querschnittsmessung), c) Laserinterferometrie und d) Projektion.

Die Glasfasern der Komponente C) werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt.

Besonders bevorzugte Haftvermittler auf Silanbasis für die Vorbehandlung der Glasfasern sind Silanverbindungen der allgemeine Formel (I)

(X-(CH₂)_{q})ₖ-Si-(O-CᵣH₂ᵣ₊₁)₄₋ₖ (I)

worin
- X: für NH₂-, Carboxyl-, HO- oder 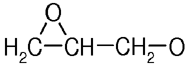 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Insbesondere bevorzugte Haftvermittler für die Glasfasern sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane der Formel (I), welche als Substituent X eine Glycidyl- oder eine Carboxylgruppe enthalten, wobei Carboxylgruppen insbesondere ganz besonders bevorzugt sind.

Für die Ausrüstung der als Komponente C) einzusetzenden Glasfasern wird der Haftvermittler, bevorzugt die Silanverbindungen gemäß Formel (I), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente C), eingesetzt.

Gemäß "http://www.r-g.de/wiki/Glasfasern" werden Glasfasern im Schmelzspinnverfahren, vorzugsweise im Düsenzieh-, Stabzieh- oder Düsenblasverfahren, hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier die erfindungsgemäß vorzugsweise einzusetzenden Glasfasersorten gelistet sind:
- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/m² und 216 g/m²)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter "http://de.wikipedia.org/wiki/Glasfaser". Für die Kunststoffverstärkung haben E-Glasfasern die größte Bedeutung erlangt, die erfindungsgemäß insbesondere bevorzugt sind. E steht für Elektro-Glas, da es ursprünglich vor allem in der Elektroindustrie eingesetzt wurde.

Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte.

Glasfasern aus E-Glas sind der am weitesten verbreitete Verstärkungswerkstoff. Die Festigkeitseigenschaften entsprechen denen von Metallen (z. B. Alu-Legierungen), wobei das spezifische Gewicht von Laminaten niedriger ist, als das der Metalle. E-Glasfasern sind unbrennbar, hitzefest bis ca. 400 °C und beständig gegen die meisten Chemikalien und Witterungseinflüsse.

### Komponente D)

Als Komponente D) enthalten die erfindungsgemäßen Zusammensetzungen Melamincyanurat [CAS Nr. 37640-57-6]. Unter Melamincyanurat versteht man das Reaktionsprodukt aus vorzugsweise äquimolaren Mengen von Melamin und Cyanursäure bzw. Isocyanursäure. Hierzu zählen u.a. sämtliche handelsüblichen und kommerziell verfügbaren Produktqualitäten. Beispiele hierfür sind u.a. Melapur® MC 25 und Melapur® MC 50 (Fa. BASF SE, Ludwigshafen, Deutschland). Das erfindungsgemäß einzusetzende Melamincyanurat enthält bevorzugt Partikel mit mittleren Teilchendurchmessern im Bereich von 0,1 µm bis 100 µm, besonders bevorzugt im Bereich von 0,1 µm bis 30 µm, ganz besonders bevorzugt im Bereich von 0,1 µm bis 7 µm und kann oberflächenbehandelt bzw. mit bekannten Mitteln beschichtet bzw. beschlichtet sein. Hierzu zählen bevorzugt organische Verbindungen, die in monomerer, oligomerer und/oder polymerer Form auf das Melamincyanurat aufgebracht sein können. Insbesondere bevorzugt können Beschichtungssysteme verwendet werden, die auf Silizium-haltigen Verbindungen, insbesondere organofunktionalisierten Silanen oder Organosiloxanen basieren. Beschichtungen mit anorganischen Komponenten sind ebenfalls möglich.

### Komponente E)

Das als Komponente E) einzusetzende Titandioxid [CAS Nr. 13463-67-7] hat bevorzugt eine mittlere Teilchengröße im Bereich von 90 nm bis 2000 nm, besonders bevorzugt im Bereich von 200 nm bis 800 nm auf. Die Teilchengrößenbestimmung erfolgt durch Laserdiffraktometrie (siehe oben).

Für das erfindungsgemäß als Komponente E) einzusetzende Titandioxid kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al-Dotierung von 0,3 bis 3,0 Gew.-% (gerechnet als Al₂O₃) und einen Sauerstoffüberschuss in der Gasphase bei der Oxidation des Titantetrachlorids zu Titandioxid von mindestens 2 %; beim SP-Grundkörper durch eine Dotierung bevorzugt mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte fotokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Fotoaktivität des Titandioxids dieses anorganisch nachbehandelt, besonders bevorzugt mit Oxiden von Si und / oder Al und / oder Zr und/oder durch den Einsatz von Sn-Verbindungen.

Bevorzugt ist die Oberfläche von pigmentärem Titandioxid mit amorphen Ausfällungen von Oxidhydraten der Verbindungen SiO₂ und/oder Al₂O₃ und / oder Zirkonoxid bedeckt. Die Al₂O₃-Hülle erleichtert die Pigmentdispergierung in der Polymermartrix, die SiO₂-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Kommerziell erhältliche Produkte sind beispielsweise Kronos® 2230, Kronos® 2225 und Kronos® vlp7000 der Fa. Kronos, Dallas, USA.

Das Titandioxid kann direkt als Pulver oder in Form von Masterbatchen eingesetzt werden, wobei im Falle von Masterbatchen die Masterbatche auf Basis von Polyamid bevorzugt sind. Alternativ können auch Titandioxid Masterbatche auf Basis von Polycarbonat, Polybutylenterephthalat, Polyethylen, Maleinsäureanhydrid-gepfropftem Polyethylen und/oder Maleinsäureanhydrid gepfropftem Polypropylen verwendet werden, wobei auch eine Mischung der genannten Polymere für den Masterbatch verwendet werden kann.

### Komponente F)

Die in einer bevorzugten Ausführungsform der erfindungsgemäßen Zusammensetzungen als Komponente F) einzusetzenden Gleit- und/oder Entformungsmittel sind bevorzugt langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen von 28 bis 32 C-Atomen.

Erfindungsgemäß werden besonders bevorzugt Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt.

Ganz besonders bevorzugt wird wenigstens ein Gleit- und/oder Entformungsmittel aus der Gruppe Ethylen-bis-stearylamid, Calciumstearat und Ethylenglycoldimontanat eingesetzt.

Insbesondere bevorzugt wird Calciumstearat [CAS Nr. 1592-23-0] oder Ethylen-bis-stearylamid [CAS Nr. 110-30-5] eingesetzt.

Insbesondere besonders bevorzugt wird Ethylen-bis-stearylamid (Loxiol® EBS von Emery Oleochemicals) eingesetzt.

### Komponente G)

Als Komponente G) wird wenigstens ein Laserabsorber eingesetzt. Gemäß Kunststoffe 8, 2008, 119 - 121 handelt es sich dabei um Laserlicht Absorber, bevorzugt zum Beschriften von Kunststofferzeugnissen. Der als Komponente G) einzusetzende Laserabsorber wird bevorzugt ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon. Besonders bevorzugt sind Antimontrioxid und Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis Polyamid oder solche auf Basis Polybutylenterephthalat, Polyethylen, Polypropylen, Polyethylen-Polypropylen-Copolymer, Maleinsäureanhydrid-gepfropftem Polyethylen und/oder Maleinsäureanhydrid gepfropftem-Polypropylen, wobei die Polymere für den Antimontrioxid-Masterbatch einzeln oder im Gemisch eingesetzt werden können. Ganz besonders bevorzugt wird Antimontrioxid in Form eines Polyamid 6-basierten Masterbatches eingesetzt.

Der Laserabsorber kann einzeln oder als Gemisch mehrerer Laserabsorber eingesetzt werden.

Laserabsorber können Laserlicht einer bestimmten Wellenlänge absorbieren. In der Praxis liegt diese Wellenlänge im Bereich von 157 nm bis 10,6 µm. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, oder CO₂-Laser eingesetzt.

### Komponente H)

In einer Ausführungsform können die erfindungsgemäßen Zusammensetzungen als Komponente H) neben dem als Komponente D) einzusetzenden Melamincyanurat wenigstens ein von Komponente D) verschiedenes Flammschutzmittel enthalten, bevorzugt ein halogenfreies und/oder phosphorfreies Flammschutzmittel.

Bevorzugte halogenfreie und/oder phosphorfreie Flammschutzmittel sind stickstoffhaltige Flammschutzmittel, die einzeln oder im Gemisch eingesetzt werden.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, und Kondensationsprodukte des Melamins wie z. B. Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive wie Aluminium- und/oder Magnesiumhydroxid, Ca-Mg-Carbonat-Hydrate (siehe DE-A 4 236 122) eingesetzt werden.

In Frage kommen ferner Flammschutzmittelsynergisten aus der Gruppe der sauerstoff-, stickstoff- oder schwefelhaltigen Metallverbindungen, bevorzugt Zinkoxid, Zinkborat, Zinkstannat, Zinkhydroxystannat, Zinksulfid, Molybdänoxid, Magnesiumoxid, Magnesiumcarbonat, Calciumcarbonat, Calciumoxid, Titannitrid, Bornitrid, Magnesiumnitrid, Zinknitrid, Zinkphosphat, Calciumphosphat, Calciumborat, Magnesiumborat oder deren Mischungen.

In einer alternativen Ausführungsform können als Komponente H) aber auch - sofern der Bedarf es erfordert - halogenhaltige und/oder phosphorhaltige Flammschutzmittel eingesetzt werden.

Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können.

Bevorzugte phosphorhaltige Flammschutzmittel sind roter Phosphor, Metallphosphinate, insbesondere Aluminiumphosphinat oder Zinkphosphinat, Metallphosphonate, insbesondere Aluminiumphosphonat, Calciumphosphonat oder Zinkphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Zink-bis(diethylphosphinat), Aluminium-tris(diethylphosphinat), Melaminphosphat, Melaminpyrophosphat, Melaminpolyphosphat, Melamin-poly(aluminiumphosphat), Melamin-poly(zinkphosphat) oder Phenoxyphosphatenoligomere und deren Mischungen.

Weitere als Komponente H) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

### Komponente K)

Als Komponente K) enthalten die Zusammensetzungen wenigstens einen, von den Komponenten B) und C) verschiedenen, weiteren Füllstoff oder Verstärkungsstoff.

Dabei können auch Mischungen aus zwei oder mehreren unterschiedlichen Füllstoffen und/oder Verstärkungsstoffen, bevorzugt auf Basis von Talk, Glimmer, Silikat, amorphem Quarzglas, Wollastonit, Kaolin, amorphe Kieselsäuren, nanoskalige Mineralien, besonders bevorzugt Montmorillonite oder Nano-Böhmit, Magnesiumcarbonat, Kreide, Feldspat, Bariumsulfat und/oder faserförmige Füllstoffe und/oder Verstärkungsstoffe auf der Basis von Kohlenstofffasern aber auch unbehandelte, oberflächenmodifizierte oder beschichtete kugelförmige Füll- und Verstärkungsstoffe aus Glas eingesetzt werden. Bevorzugt werden mineralische teilchenförmige Füllstoffe auf der Basis von Talk, Glimmer, Silikat, Wollastonit, Kaolin, amorphe Kieselsäuren, Magnesiumcarbonat, Kreide, Feldspat und/oder Bariumsulfat eingesetzt. Besonders bevorzugt werden mineralische teilchenförmige Füllstoffe auf der Basis von Talk, Wollastonit und/oder Kaolin eingesetzt.

Besonders bevorzugt werden ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist der nadelförmige, mineralische Füllstoff ein Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittlere Teilchengröße der nadelförmigen, mineralischen Füllstoffe liegt bevorzugt bei kleiner 20 µm, besonders bevorzugt bei kleiner 15 µm, insbesondere bevorzugt bei kleiner 10 µm, bestimmt mit einem CILAS GRANULOMETER.

Besonders bevorzugt wird aber auch nicht-faserförmiges und nicht-geschäumtes gemahlenes Glas mit einer Teilchengrößenverteilung, die einen d90 im Bereich von 5 bis 250 µm, bevorzugt im Bereich von 10 bis 150 µm, besonders bevorzugt im Bereich von 15 bis 80 µm, ganz besonders bevorzugt im Bereich von 16 bis 25 µm aufweist und einer Länge im Bereich von 0,01 bis 0,5 mm, eingesetzt. Bevorzugt wird nicht-faserförmiges und nicht-geschäumtes gemahlenes Glas eingesetzt, das zudem einen d10 im Bereich von 0,3 bis 10 µm, bevorzugt im Bereich von 0,5 bis 6 µm, besonders bevorzugt im Bereich von 0,7 bis 3 µm aufweist. Dabei ist solches nicht-faserförmiges und nicht-geschäumtes gemahlenes Glas ganz besonders bevorzugt, das ferner einen d50 im Bereich von 3 bis 50 µm, bevorzugt im Bereich von 4 bis 40 µm, besonders bevorzugt im Bereich von 5 bis 30 µm aufweist.

Bezüglich der d10, d50 und d90-Werte, ihrer Bestimmung und ihrer Bedeutung sei nochmals auf Chemie Ingenieur Technik (72) S. 273-276, 3/2000, Wiley-VCH Verlags GmbH, Weinheim, 2000 verwiesen, wonach der d10-Wertdiejenige Partikelgröße ist, unterhalb derer 10 % der Partikelmenge liegen, der d50-Wert diejenige Partikelgröße ist, unterhalb derer 50 % der Partikelmenge liegen (Medianwert) und der d90-Wert diejenige Partikelgröße ist, unterhalb derer 90 % der Partikelmenge liegen.

Bevorzugt weist ein erfindungsgemäß einzusetzendes nicht-faserförmiges und nicht-geschäumtes gemahlenes Glas eine mittlere Teilchengröße im Bereich von 3 bis 60 µm, insbesondere bevorzugt im Bereich von 15 bis 30 µm auf. Die Angaben der Teilchengrößenverteilung bzw. der Teilchengrößen beziehen sich hierbei auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande). Aber auch die bereits oben erläuterte Laserdiffraktometrie gemäß der Norm ISO 13320 kann zur Teilchengrößenbestimmung herangezogen werden.

Erfindungsgemäß bevorzugt ist das nicht-faserförmige und nicht-geschäumte gemahlene Glas von partikelförmiger, nicht zylindrischer Gestalt und hat ein Längen- zu Dickenverhältnis kleiner 5, bevorzugt kleiner als 3, besonders bevorzugt kleiner 2. Der Wert Null ist selbstverständlich ausgeschlossen.

Zur Abgrenzung von der vorliegenden Erfindung wird unter geschäumtem Glas, häufig auch Blähglas genannt, ein Glas verstanden, in dem Gasbläschen beispielsweise aus Luft oder Kohlendioxid eingeschlossen sind. Dieser Einschluss von Gas führt jedoch im Gegensatz zu dem nicht-geschäumten Glas zu einer Verringerung der Dichte. Das nicht-geschäumte und nicht-faserförmige gemahlene Glas erfährt also keine Dichte-Verringerung durch etwaige Gaseinschlüsse.

Zur Abgrenzung von der vorliegenden Erfindung wird unter faserförmigem Glas eine Glasgeometrie mit zylindrischem oder ovalen Querschnitt verstanden, die ein Längen- zu Durchmesserverhältnis (L/D-Verhältnis) größer 5 aufweist. Das nicht-geschäumte und nicht faserförmige gemahlene Glas ist deshalb zudem dadurch gekennzeichnet, dass es nicht die für faserförmiges Glas typische Glasgeometrie mit zylindrischem oder ovalen Querschnitt mit einem Längen- zu Durchmesserverhältnis (L/D-Verhältnis) größer 5 aufweist.

Das nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Als Ausgangsmaterial kommen alle geometrischen Formen von erstarrtem Glas in Betracht.

Bevorzugte Ausgangsmaterialien für die Vermahlung zu nicht-faserförmigem und nichtgeschäumtem gemahlenem Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nicht-gefärbtes Glas als Ausgangsmaterial bevorzugt ist.

Als Ausgangsglas für die Vermahlung kommen prinzipiell alle Glasarten in Betracht wie sie z. B. in DIN1259-1 beschrieben sind. Bevorzugt sind Kalk-Natron-Glas, Floatglas, Quarzglas, Bleikristallglas, Borsilikatglas A-Glas und E-Glas, wobei Kalk-Natron-Glas, Borsilikatglas, A-Glas und E-Glas besonders bevorzugt sind, A-Glas und E-Glas ganz besonders bevorzugt sind, insbesondere E-Glas. Bezüglich physikalischer Daten und Zusammensetzung von E-Glas sei auf "http://wiki.r-g.de/index.php?title=Glasfasern" verwiesen. Insbesondere bevorzugtes nicht-faserförmiges und nicht-geschäumtes gemahlenes E-Glas zeichnet sich durch wenigstens eines der nachfolgend in Tabelle 1 genannten Merkmale aus:

**Tabelle 1**

| **Eigenschaften E-Glas** | **Einheit** | **E-Glas** |
|---|---|---|
| Dichte | g/cm² bei 20 °C | 2,6 |
| Zugfestigkeit | MPa | 3400 |
| Zug_E-Modul | GPa | 73 |
| Bruchdehnung | % | 3,5-4 |

| **Chemische Zusammensetzung** | **Einheit** | **Wert** |
|---|---|---|
| SiO₂ | % | 53-55 |
| Al₂O₃ | % | 14-15 |
| B₂O₃ | % | 6-8 |
| CaO | % | 17-22 |
| MgO | % | <5 |
| K₂O, Na₂O | % | <1 |
| Andere Oxide | % | ca.1 |

Ebenfalls besonders bevorzugt für die Herstellung des nicht-geschäumten und nicht-faserförmigen Glases sind Glasarten, bei denen der Gehalt an K₂O kleiner oder gleich 2 Gew.-% bezogen auf alle Komponenten des Glases ist. Das nicht-geschäumte und nicht-faserförmige gemahlene Glas kann beispielsweise von der Firma VitroMinerals, Covington, GA, USA bezogen werden. Es wird als sogenanntes CS Glass Powder in den Spezifikationen CS-325, CS-500 und CS-600 oder auch als LA400 angeboten. (siehe auch "www.glassfillers.com" oder Chris DeArmitt, Additives Feature, Mineral Fillers , COMPOUNDING WORLD, Februar 2011, Seiten 28-38 bzw. "www.compoundingworld.com").

Das als zusätzlicher Füllstoff K) einzusetzende gemahlene Glas hat bevorzugt eine Dichte (nicht Schüttdichte !) nach ASTM C 693 im Bereich von 2400 bis 2700 kg/m³, besonders bevorzugt im Bereich von 2400 bis 2600 kg/m³ und unterscheidet sich damit deutlich von Schaumglas (Dichte = 100 - 165 kg/m³), Schaumglas Granulat (Dichte = 130 - 170 kg/m³) und Blähglas (Dichte = 110 - 360 kg/m³) siehe auch AGY Produktbroschüre Pub. No. LIT-2006-111 R2 (02/06).

Das nicht-geschäumte und nicht-faserförmige gemahlene Glas ist in einer Ausführung mit einer Oberflächenmodifizierung oder Schlichte auf Basis von Aminoalkyltrialkoxysilan versehen. In alternativen oder bevorzugten Ausführungsformen kann das als Komponente K) einzusetzende nicht-geschäumte und nicht-faserförmige gemahlene Glas mit zusätzlicher Oberflächenmodifizierung oder Schlichte auf Silan- bzw. Siloxanbasis versehen sein, bevorzugt mit Glycidyl-, Carboxyl, Alkenyl-, Acryloxyalkyl- und/oder Methacryloxyalkyl- funktionalisierten Trialkoxysilanen oder deren wässrige Hydrolysate sowie Kombinationen daraus.

Bevorzugte Aminoalkyltrialkoxysilane sind Aminopropyltrimethoxysilan, Aminobutyltrimethoxysilan, Aminopropyltriethoxysilan, Aminobutyltriethoxysilan oder deren wässrige Hydrolysate, wobei Aminopropyltriethoxysilan ganz besonders bevorzugt ist.

Die Aminoalkyltrialkoxysilane werden bevorzugt in Mengen von 0,01 Gew.-% bis 1,5 Gew.-%, besonders bevorzugt in Mengen von 0,05 Gew.-% bis 1,0 Gew.-% und ganz besonders bevorzugt in Mengen von 0,1 Gew.-% bis 0,5 Gew.-% bezogen auf das als Komponente K) einzusetzende nicht-geschäumte und nicht-faserförmige gemahlene Glas zur Oberflächenbeschichtung eingesetzt.

Das Ausgangsglas für die Vermahlung kann bereits mit Oberflächenmodifizierung oder Schlichte behandelt sein. Ebenso kann das als Komponente K) einzusetzende nicht-geschäumte und nicht-faserförmige gemahlene Glas nach der Vermahlung mit Oberflächenmodifizierung oder Schlichte behandelt werden.

Insbesondere kann MF7900 der Lanxess Deutschland GmbH, Köln, eingesetzt werden, ein nicht-faserförmiges und nicht-geschäumtes gemahlenes Glas auf Basis E-Glas mit einem d90 von 54 µm, einem d50 von 14 µm, einem d10 von 2,4 µm und einer mittleren Teilchengröße von 21 µm, jeweils bezogen auf die Teilchenoberfläche, sowie enthaltend ca. 0,1 Gew.-% Triethoxy(3-aminopropyl)silan-Schlichte.

Abgesehen vom nicht-geschäumten und nicht-faserförmigen gemahlenen Glas sind auch die als Komponente K) ferner genannten Füllstoffe und/oder Verstärkungsstoffe in einer bevorzugten Ausführungsform Oberflächen modifiziert, vorzugsweise mit einem Haftvermittler bzw. Haftvermittlersystem, besonders bevorzugt auf Silanbasis. Die Vorbehandlung ist jedoch nicht unbedingt erforderlich. Als Haftvermittler kommen ebenfalls die bereits oben beschriebenen Silanverbindungen der allgemeinen Formel (I) infrage.

Für die Ausrüstung der Komponente K) werden die Silanverbindungen im Allgemeinen in Mengen von 0,05 bis 2 Gew.-%, vorzugsweise 0,25 bis 1,5 Gew.-% und insbesondere 0,5 bis 1 Gew.-%, bezogen auf den mineralischen Füllstoff zur Oberflächenbeschichtung, eingesetzt.

Auch die Füllstoffe der Komponente K) können bedingt durch die Verarbeitung zur Zusammensetzung bzw. zur Formmasse oder Erzeugnis einen kleineren d90- bzw. d50-Wert aufweisen, als in der ursprünglich eingesetzten Form.

### Komponente L)

Bevorzugte als Komponente L) einzusetzende Additive sind Antioxidantien, UV-Stabilisatoren, Gammastrahlenstabilisatoren, Hydrolysestabilisatoren, Thermostabilisatoren, Antistatika, Emulgatoren, Nukleierungsmittel, Weichmacher, Verarbeitungshilfsmittel, Fließhilfsmittel, Schlagzähmodifikatoren, Farbmittel und Elastomermodifikatoren. Diese Additive können alleine oder in Mischung bzw. in Form von Masterbatchen eingesetzt werden.

Bevorzugt wird als **Antioxidans** Lowinox® HD 98, 3,3'-Bis(3,5-di-tert-butyl-4-hydroxyphenyl)-N,N'-hexamethylendipropionamid [CAS Nr. 23128-74-7] eingesetzt.

Als **UV-Stabilisatoren** werden bevorzugt substituierte Resorcine, Salicylate, Benzotriazole und Benzophenone eingesetzt.

Als **Farbmittel** werden bevorzugt anorganische Pigmente, insbesondere Ultramarinblau [CAS Nr. 57455-37-5], Eisenoxid, Titandioxid (sofern nicht bereits als Komponente E) eingesetzt), Zinksulfid [CAS Nr. 1314-98-3] (sofern nicht bereits als Komponente H) eingesetzt) oder Ruß [CAS Nr. 1333-86-4] eingesetzt. Als Farbmittel werden weiterhin bevorzugt organische Pigmente eingesetzt, besonders bevorzugt Phthalocyanine, Chinacridone oder Perylene. Als Farbmittel werden zudem bevorzugt Farbstoffe, besonders bevorzugt Nigrosin [CAS Nr. 8005-03-6] oder Anthrachinone eingesetzt.

Als **Thermostabilisator** werden bevorzugt sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt. Sterisch gehinderte und somit anspruchsvolle Gruppen im Sinne der vorliegenden Erfindung sind bevorzugt tert.-Butylgruppen, Isopropylgruppen und mit sterisch anspruchsvollen Gruppen substituierte Arylgruppen. Sterisch anspruchsvolle Gruppen im Sinne der vorliegenden Erfindung sind insbesondere tert.-Butylgruppen. Besonders bevorzugt werden sterisch gehinderte Phenole alleine oder in Kombination mit Phosphiten eingesetzt, wobei die Verwendung von N,N'-Bis[3-(3',5'-di-tert-butyl-4'-hydroxyphenyl)propionyl]hexamethylenediamine [CAS Nr. 23128-74-7] (z. B. Irganox® 1098 der Fa. BASF SE, Ludwigshafen. Deutschland) ganz besonders bevorzugt ist.

Als **Nukleierungsmittel** werden bevorzugt Natrium- oder Calciumphenylphosphinat, Aluminiumoxid oder Siliziumdioxid sowie ganz besonders bevorzugt Talkum [CAS Nr. 14807-96-6] eingesetzt, wobei diese Aufzählung nicht abschließend ist.

Als **Fließhilfsmittel** werden bevorzugt Copolymerisate aus mindestens einem α-Olefin mit mindestens einem Methacrylsäurester oder Acrylsäureester eines aliphatischen Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester [CAS Nr. 103-11-7]. Als Fließhilfsmittel geeignete Copolymerisate zeichnen sich neben der Zusammensetzung auch durch das niedrige Molekulargewicht aus. Dementsprechend sind als Komponente L) einzusetzende Fließhilfsmittel aus mindestens einem α-Olefin mit mindestens einem Methacrylsäurester oder Acrylsäureester eines aliphatischen Alkohols vorzugsweise solche, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich auf die ISO 1133 bei 190°C und einem Prüfgewicht von 2,16 kg. Insbesondere bevorzugt wird als Fließhilfsmittel ein Copolymerisat aus Ethen und Acrylsäure-(2-ethyl)-hexylester eingesetzt.

Bevorzugt als Komponente L) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Die als Komponente L) einzusetzenden **Elastomermodifikatoren** umfassen bevorzugt u.a. ein oder mehrere Pfropfpolymerisate von
L.1 5 bis 95 Gew.-%, vorzugsweise 30 bis 90 Gew.-%, wenigstens eines Vinylmonomeren und
L.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage L.2 hat im allgemeinen eine mittlere Teilchengröße (d50-Wert) von 0,05 bis 10 µm, vorzugsweise 0,1 bis 5 µm, besonders bevorzugt 0,2 bis 1 µm.

Monomere zu L.1 sind vorzugsweise Gemische aus
L.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-(C₁-C₈)-Alkylester, insbesondere Methylmethacrylat, Ethylmethacrylat, und
L.1.2 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid.

Bevorzugte Monomere L.1.1 sind ausgewählt aus mindestens einem der Monomere Styrol, α-Methylstyrol und Methylmethacrylat, bevorzugte Monomere L.1.2 sind ausgewählt aus mindestens einem der Monomere Acrylnitril, Maleinsäureanhydrid, Glycidylmethacrylat und Methylmethacrylat.

Besonders bevorzugte Monomere sind L.1.1 Styrol und L.1.2 Acrylnitril.

Für die in den Elastomermodifikatoren einzusetzenden Pfropfpolymerisate geeignete Pfropfgrundlagen L.2 sind beispielsweise Dienkautschuke, vorzugsweise EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen L.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß L.1.1 und L.1.2, mit der Maßgabe, dass die Glasübergangstemperatur der Komponente L.2 bei <10°C, vorzugsweise bei <0°C, besonders bevorzugt bei <-10°C liegt.

Besonders bevorzugte Propfgrundlagen L.2 sind ABS-Polymerisate (Emulsions-, Masse- und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage L.2 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren vorzugsweise auf Pfropfgrundlagen L.2 Polymerisate aus Acrylsäurealkylestern, gegebenenfalls mit bis zu 40 Gew.-%, bezogen auf L.2, anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere liegt vorzugsweise im Bereich von 0,02 bis 5 Gew.-%, insbesondere im Bereich von 0,05 bis 2 Gew.-%, bezogen auf die Pfropfgrundlage L.2.

Bei cyclischen vernetzenden Monomeren mit mindestens 3 ethylenisch ungesättigten Gruppen ist es vorteilhaft, die Menge auf unter 1 Gew.-% der Pfropfgrundlage L.2 zu beschränken.

Bevorzugte "andere" polymerisierbare, ethylenisch ungesättigte Monomere, die neben den Acrylsäureestern gegebenenfalls zur Herstellung der Pfropfgrundlage L.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage L.2 sind Emulsionspolymerisate, die einen Gelgehalt von mindestens 60 Gew.-% aufweisen.

Weitere bevorzugt geeignete Pfropfgrundlagen gemäß L.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Erfindungsgemäß besonders bevorzugt sind Zusammensetzungen enthaltend Polyamid 6, Nephelinsyenit, Glasfasern und Melamincyanurat.

Erfindungsgemäß besonders bevorzugt sind Zusammensetzungen enthaltend Polyamid 6, Nephelinsyenit, Glasfasern, Melamincyanurat und Ethylen-bis-stearylamid.

Erfindungsgemäß besonders bevorzugt sind Zusammensetzungen enthaltend Polyamid 6, Nephelinsyenit, Glasfasern, Melamincyanurat, Ethylen-bis-stearylamid und 3,3'-Bis(3,5-di-tert-butyl-4-hydroxyphenyl)-N,N'-hexamethylendipropionamid.

### Verfahren

Die vorliegende Erfindung betrifft zudem ein Verfahren zur Herstellung von Erzeugnissen, bevorzugt von Elektrobauteilen, besonders bevorzugt von FI-Schaltern und von Leitungsschutzschaltern, ganz besonders bevorzugt von Leitungsschutzschaltern mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A durch Einsatz der erfindungsgemäßen Zusammensetzungen im Spritzguss einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder beim Blasformen.

Erzeugnisse im Sinne der vorliegenden Erfindung sind aber auch Halbzeuge, insbesondere Composites oder überspritzte Composites, enthaltend Verstärkungen, vorzugsweise Verstärkungen aus Endlosfasern und/oder Langfasern, worin erfindungsgemäße Zusammensetzungen entweder in der Matrix, oder in der für die Überspritzung einzusetzenden Spritzmasse, oder in beidem eingesetzt werden. Ein Verfahren zur Herstellung endlosfaserverstärkter Composites mit einer Thermoplastmatrix ist beispielsweise aus DE 38 13 694 A1 bekannt. Polyamid basierte Composites und ihre Herstellung sind beispielsweise aus WO 2011 / 014754 A1 oder WO 2014 / 204522 A1 bekannt, überspritzte Polyamid basierte Composite Strukturen werden beispielsweise in der WO 2011 / 014751 A1 beschrieben. Der Inhalt dieser Zitate wird von der vorliegenden Anmeldung vollumfänglich umfasst.

Zur Herstellung dieser Erzeugnisse werden die einzelnen Komponenten in den erfindungsgemäßen Zusammensetzungen, also die Komponenten A), B), C), D) sowie gegebenenfalls zusätzlich wenigstens eine der Komponenten E) bis L), zunächst in wenigstens einem Mischwerkzeug gemischt und diese dann als Formmasse vorliegende Mischung durch wenigstens einen Mischwerkzeugauslass entweder der direkten Weiterverarbeitung zugeführt, oder als Strang ausgetragen und mittels eines Granulators, bevorzugt einer rotierenden Messerwalze, in Granulate gewünschter Länge geschnitten, um für eine spätere Verarbeitung zur Verfügung zu stehen.

Da die meisten Verarbeiter Kunststoff in Form von Granulat benötigen, spielt das Granulieren eine wesentliche Rolle. Man unterscheidet grundsätzlich zwischen Heiß- und Kaltabschlag. Je nach Verarbeitung resultieren daraus verschiedene Kornformen. Im Falle der Heißabschlags erhält man das Granulat in Perlen- oder Linsenkornform, im Falle des Kaltabschlags erhält man das Granulat in Zylinderformen oder Würfelformen. Erfindungsgemäße Zusammensetzungen bzw. darauf basierende Formmassen in Granulatform werden bevorzugt durch Kaltabschlag erhalten.

Dem Fachmann steht es frei, verschiedene Mischwerkzeuge einzusetzen, die geeignet sind, ein optimales Mischergebnis hinsichtlich einer Mischung der Komponenten in den erfindungsgemäß zu verwendenden Zusammensetzungen zu erzielen. Ein Extruder ist ein bevorzugtes Mischwerkzeug im Sinne der vorliegenden Erfindung. Bevorzugte Extruder sind Einschneckenextruder oder Doppelschneckenextruder sowie die jeweiligen Untergruppen, ganz besonders bevorzugt konventionelle Einschneckenextruder, förderwirksame Einschneckenextruder, gegenläufige Doppelschneckenextruder oder gleichläufige Doppelschneckenextruder. Diese sind dem Fachmann aus Technische Thermoplaste 4. Polyamide, Hrsg.: G. W. Becker und D. Braun, Carl Hanser Verlag, 1998, S. 311-314 sowie K. Brast, Dissertation "Verarbeitung von Langfaser-verstärkten Thermoplasten im direkten Plastifizier-/Pressverfahren", Rheinisch-Westfälische Technische Hochschule Aachen, 2001, S. 30 - 33 bekannt.

Aus den erfindungsgemäß als Formmasse bzw. Granulat vorliegenden Zusammensetzungen werden durch formgebende Verfahren schließlich die erfindungsgemäßen Erzeugnisse, bevorzugt Elektro- bzw. Elektronikerzeugnisse, hergestellt. Bevorzugte formgebende Verfahren sind der Spritzguss oder die Extrusion.

Erfindungsgemäße Verfahren zur Herstellung von Erzeugnissen durch Extrusion oder Spritzguss arbeiten bevorzugt bei Schmelzetemperaturen im Bereich von 230 bis 330°C, besonders bevorzugt bei Schmelzetemperaturen im Bereich von 250 bis 300°C sowie bevorzugt zusätzlich bei Drücken von maximal 2500 bar, besonders bevorzugt bei Drücken von maximal 2000 bar, ganz besonders bevorzugt bei Drücken von maximal 1500 bar und insbesondere bevorzugt bei Drücken von maximal 750 bar.

Das Verfahren des Spritzgusses zeichnet sich dadurch aus, dass die erfindungsgemäße Zusammensetzung, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt. Man unterscheidet dabei die Arbeitsschritte
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, die erfindungsgemäß einzusetzende Zusammensetzung, insbesondere in Form von Granulat, aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierten Teilfüllung der Gussform. Im verfahrensspezifischen Arbeitsschritt wird ein Prozessmedium über einen so genannten Injektor in die schmelzeflüssige Seele des Vorspritzlings zur Hohlraumbildung injiziert. Dabei handelt es sich um Gas - in der Regel Stickstoff - im Fall der GIT und um Wasser im Fall der WIT. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, enthaltend die erfindungsgemäße Zusammensetzung, in einem Extruder eingesetzt, wobei der Extruder eine Maschine zur Herstellung thermoplastischer Formstücke ist. Man unterscheidet
- Einschneckenextruder und Doppelschneckenextruder sowie die jeweiligen Untergruppen,
- konventionelle Einschneckenextruder, förderwirksame Einschneckenextruder,
- gegenläufige Doppelschneckenextruder und gleichläufige Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind gemäß (Thielen, Hartwig, Gust, "Blasformen von Kunststoffhohlkörpern", Carl Hanser Verlag, München 2006, Seiten 15 bis 17):
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei hängenden Vorformlings durch eine in der Regel aus zwei Halbschalen bestehende Form, dem Blasformwerkzeug,
4. Einschieben eines Blasdorns oder einer (ggf. mehrerer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Erzeugnisse mit komplexer Geometrie und mehrachsigen Krümmungen herstellen. Allerdings werden dann Erzeugnisse erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch "gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

### Verwendung

Gegenstand der vorliegenden Anmeldung ist auch die Verwendung von Nephelinsyenit zur Herstellung von Polyamid basierten Erzeugnissen, insbesondere zur Erzielung von hoher Wärmeformbeständigkeit bei gleichzeitig geringem isotropem Schwindungsverhalten und guten Selbstverlöschungseigenschaften im Glühdrahttest nach IEC60695-2-12, vorzugsweise auch bei dünnen Wandstärken um 0,8 mm.

Ferner ist Gegenstand die Verwendung der erfindungsgemäßen Zusammensetzungen als Formmassen im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, im Blasformen, besonders bevorzugt Standard-Extrusionsblasformen, 3D-Extrusionsblasformverfahren oder Saugblasformverfahren, um daraus erfindungsgemäße Erzeugnisse herzustellen.

Die vorliegende Erfindung betrifft aber auch die Verwendung der erfindungsgemäßen Zusammensetzungen zur Herstellung von Erzeugnissen, bevorzugt von Elektrobauteilen oder Elektronikbauteilen, besonders bevorzugt FI-Schalter und Leitungsschutzschalter, ganz besonders bevorzugt Leitungsschutzschalter mit Bemessungsströmen >16 A, insbesondere bevorzugt von Leitungsschutzschaltern mit Bemessungsströmen >32 A, insbesondere ganz besonders bevorzugt von Leitungsschutzschaltern mit Bemessungsströmen >64 A, sowie Composit Strukturen oder überspritzten Composit Strukturen.

### Beispiele

Es wurden zunächst durch Compoundierung entsprechende Kunststoff-Zusammensetzungen angefertigt. Die einzelnen Komponenten gemäß Tabelle 2 wurden hierzu in einem Zweiwellenextruder (ZSK 25 Compounder der Fa. Coperion Werner & Pfleiderer (Stuttgart, Deutschland)) bei Temperaturen zwischen 240 und 280°C gemischt, als Strang ausgetragen, bis zur Granulierfähigkeit abgekühlt und granuliert. Nach dem Trocknen (in der Regel zwei Tage bei 70°C im Vakuumtrockenschrank) erfolgte die Verarbeitung des Granulats bei Temperaturen im Bereich von 240 bis 280°C zu Normprüfkörpern für die jeweiligen Prüfungen.

Die Glühdrahtbeständigkeit wurde anhand der Glühdrahtprüfung GWFI (Glow-Wire Flammability-Index) nach IEC 60695-2-12 an Rundplatten mit einem Durchmesser von 80 mm und einer Dicke von 0,75 mm bestimmt.

Die Wärmeformbeständigkeit wurde nach ISO 75-1,-2 mit einer aufgebrachten Biegespannung von 1,8MPa (HDT-A) an Prüfkörpern der Abmessung 80 mm • 10 mm • 4 mm bestimmt.

Die Bestimmung der Verarbeitungsschwindung, jeweils parallel und senkrecht zur Spritzrichtung, wurde nach ISO 294-4 an Probekörpern der Abmessung 60 mm • 60 mm • 2 mm bei einer Massetemperatur von 260 °C und einer Werkzeugtemperatur von 80 °C bei 600 bar Nachdruck bestimmt.

Als Maß für die Isotropie wurde anschließend der Verzug als Quotient aus Verarbeitungsschwindung parallel zur Spritzrichtung und Verarbeitungsschwindung senkrecht zur Spritzrichtung berechnet. Für die so berechnete Isotropie kann man ab Werten oberhalb von 0,8 von verzugsarmen Materialien sprechen.

So weist z. B. ein handelsübliches Polyamid 6 mit 30 Gew.-% Glasfasern eine Verarbeitungsschwindung von 0,3% / 0,7% [parallel/senkrecht] aus, was dann nach o.g. Formel zu einem Wert für Isotropie von nur 0,4 führt und damit einen starken Verzug bedeutet.

Bei den zitierten Normen werden die zum Anmeldetag der vorliegenden Erfindung gültigen Versionen zugrunde gelegt.

In den Versuchen wurden verwendet:
Komponente A): Polyamid 6 (Durethan® B26, Fa. Lanxess Deutschland GmbH, Köln, Deutschland)
Komponente B): Nephelinsyenit (Minex® S-6 der Fa. Sibelco Speciality Minerals Europe, Rud, Norwegen)
Komponente C): Schnittglasfaser CS 7997 der Firma Lanxess Deutschland GmbH, Köln, Deutschland [mittlerer Faserdurchmesser 11 µm, mittlere Faserlänge 4,5 mm, E-Glas]
Komponente D): Melamincyanurat, [CAS Nr. 37640-57-6] (Melapur® MC25, der Fa. BASF, Ludwigshafen, Deutschland)
Komponente H): Ethylen-bis-stearylamid [CAS Nr. 110-30-5] als Loxiol® EBS von Emery Oleochemicals
Komponente L): Lowinox® HD 98 - 50 D - TDS, 3,3'-Bis(3,5-di-tert-butyl-4-hydroxyphenyl)-N,N'-hexamethylendipropionamid [CAS Nr. 23128-74-7]

**Tabelle 2**

| **Komponenten** | | **1** |
|---|---|---|
| A | [%] | 70,8 |
| B | [%] | 20 |
| C | [%] | 5 |
| D | [%] | 4 |
| H | [%] | 0,1 |
| L | [%] | 0,1 |
| GWFI (0,75mm) | [°C] | 960 |
| HDT A | [°C] | >135 |
| Verarbeitungsschwindung (parallel) | [%] | 0,6 |
| Verarbeitungsschwindung (senkrecht) | [%] | 0,7 |
| Isotropie [parallel/ senkrecht] | | 0,8 |

Die Angaben der Komponenten in sind in Gew.-% bezogen auf die Gesamtformmasse.

Das Beispiel in **Tabelle 2** zeigt, dass die erfindungsgemäße Zusammensetzung in der Glühdrahtprüfung auch bei Probekörpern von nur 0,75 mm Dicke die maximale Temperatur von 960°C erreicht, dabei mit einer Isotropie oberhalb von 0,8 eine sehr geringe Verzugsneigung hat und dennoch Wärmeformbeständigkeiten nach HDT A oberhalb von 135°C aufweist.

## Patentansprüche

1. Zusammensetzungen, enthaltend
A) Polyamid,
B) Nephelinsyenit,
C) Glasfasern, und
D) Melamincyanurat.

2. Zusammensetzungen gemäß Anspruch 1, **dadurch gekennzeichnet, dass** Polyamid 6 oder Polyamid 66 eingesetzt werden.

3. Zusammensetzungen gemäß einem der Ansprüche 1 oder 2, **dadurch gekennzeichnet, dass** Nephelinsyenit mit einem d95 im Bereich von 1 bis 150 µm, bestimmt durch Laserdiffraktometrie gemäß der Norm ISO 13320, eingesetzt wird.

4. Zusammensetzungen gemäß einem der Ansprüche 1 bis 3, **dadurch gekennzeichnet, dass** Langglasfasern mit einer Ausgangslänge im Bereich von 1 bis 50 mm eingesetzt werden.

5. Zusammensetzungen gemäß einem der Ansprüche 1 bis 4, **dadurch gekennzeichnet, dass** diese 100 Gewichtsteile der Komponente A), 10 bis 75 Gewichtsteile der Komponente B), 2 bis 12 Gewichtsteile der Komponente C) und 0,1 bis 40 Gewichtsteile der Komponente D) enthalten.

6. Zusammensetzungen gemäß einem der Ansprüche 1 bis 5, **dadurch gekennzeichnet, dass** diese zusätzlich noch E) Titandioxid enthalten.

7. Zusammensetzungen gemäß einem der Ansprüche 1 bis 6, **dadurch gekennzeichnet, dass** diese zusätzlich zu den Komponenten A) bis E) oder anstelle von E) noch F) wenigstens ein Gleit- und/oder Entformungsmittel enthalten.

8. Zusammensetzungen gemäß einem der Ansprüche 1 bis 7, **dadurch gekennzeichnet, dass** diese zusätzlich zu den Komponenten A) bis F) oder anstelle von E) und/oder F) noch G) wenigstens einen Laserabsorber ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon enthalten.

9. Zusammensetzungen gemäß einem der Ansprüche 1 bis 8, **dadurch gekennzeichnet, dass** diese zusätzlich zu den Komponenten A) bis G) oder anstelle von E) und/oder F) und/oder G) noch H) wenigstens ein weiteres zum Melamincyanurat unterschiedliches Flammschutzmittel enthalten.

10. Zusammensetzungen gemäß einem der Ansprüche 1 bis 9, **dadurch gekennzeichnet, dass** als Komponente H) halogenfreie und/oder phosphorfreie Flammschutzmittel eingesetzt werden.

11. Zusammensetzungen gemäß einem der Ansprüche 1 bis 10, **dadurch gekennzeichnet, dass** diese zusätzlich zu den Komponenten A) bis H) oder anstelle von E) und/oder F) und/oder G) und/oder H) noch wenigstens einen von den Komponenten B) und C) verschiedenen Füllstoff als Komponente K) enthalten.

12. Zusammensetzungen gemäß einem der Ansprüche 3 bis 11, **dadurch gekennzeichnet, dass** das Nephelinsyenit eine mittlere Teilchengröße (d50) im Bereich von 1 µm bis 35 µm, bestimmt durch Laserdiffraktometrie gemäß der Norm ISO 13320, aufweist.

13. Zusammensetzungen gemäß einem der Ansprüche 1 bis 12, **dadurch gekennzeichnet, dass** das Nephelinsyenit von partikelförmiger, nicht zylindrischer Gestalt ist und ein Längen- zu Dickenverhältnis kleiner 5 aufweist.

14. Formmassen und daraus herzustellende Erzeugnisse, **dadurch gekennzeichnet, dass** diese wenigstens eine Zusammensetzung gemäß einem der Ansprüche 1 bis 13 enthalten.

15. Verfahren zur Herstellung von Erzeugnissen, **dadurch gekennzeichnet, dass** man zunächst die Komponenten der Zusammensetzungen gemäß einem der Ansprüche 1 bis 13 in wenigstens einem Mischwerkzeug mischt und diese dann als Formmasse vorliegende Mischung durch wenigstens einen Mischwerkzeugauslass entweder der direkten Weiterverarbeitung zuführt, oder als Strang austrägt und mittels eines Granulators in Granulate gewünschter Länge schneidet und die als Formmasse bzw. Granulat vorliegenden Zusammensetzungen einem formgebenden Verfahren unterzieht.

16. Verwendung von Nephelinsyenit zur Herstellung von Polyamid basierten Erzeugnissen.

## Claims

1. Compositions comprising
A) polyamide,
B) nepheline syenite,
C) glass fibres, and
D) melamine cyanurate.

2. Compositions according to Claim 1, **characterized in that** polyamide 6 or polyamide 66 is used.

3. Compositions according to one of Claims 1 or 2, **characterized in that** nepheline syenite having a d95 in the range of from 1 to 150 µm, determined by laser diffractometry according to standard ISO 13320, is used.

4. Compositions according to one of Claims 1 to 3, **characterized in that** long glass fibres having a starting length in the range of from 1 to 50 mm are used.

5. Compositions according to one of Claims 1 to 4, **characterized in that** they comprise 100 parts by weight of component A), from 10 to 75 parts by weight of component B), from 2 to 12 parts by weight of component C) and from 0.1 to 40 parts by weight of component D).

6. Compositions according to one of Claims 1 to 5, **characterized in that** they additionally also comprise E) titanium dioxide.

7. Compositions according to one of Claims 1 to 6, **characterized in that** they comprise, in addition to components A) to E) or instead of E), also F) at least one lubricant and/or demoulding agent.

8. Compositions according to one of Claims 1 to 7, **characterized in that** they comprise, in addition to components A) to F) or instead of E) and/or F), also G) at least one laser absorber selected from the group antimony trioxide, tin oxide, tin orthophosphate, barium titanate, aluminium oxide, copper hydroxyphosphate, copper orthophosphate, potassium copper diphosphate, copper hydroxide, antimony tin oxide, bismuth trioxide and anthraquinone.

9. Compositions according to one of Claims 1 to 8, **characterized in that** they comprise, in addition to components A) to G) or instead of E) and/or F) and/or G), also H) at least one further flame retardant other than melamine cyanurate.

10. Compositions according to one of Claims 1 to 9, **characterized in that** there are used as component H) halogen-free and/or phosphorus-free flame retardants.

11. Compositions according to one of Claims 1 to 10, **characterized in that** they comprise, in addition to components A) to H) or instead of E) and/or F) and/or G) and/or H), also at least one filler other than components B) and C) as component K).

12. Compositions according to one of Claims 3 to 11, **characterized in that** the nepheline syenite has a mean particle size (d50) in the range of from 1 µm to 35 µm, determined by laser diffractometry according to standard ISO 13320.

13. Compositions according to one of Claims 1 to 12, **characterized in that** the nepheline syenite is of particulate, non-cylindrical form and has a length-to-thickness ratio of less than 5.

14. Moulding compositions and products to be produced therefrom, **characterized in that** they comprise at least one composition according to one of Claims 1 to 13.

15. Method for producing products, **characterized in that** the components of the compositions according to one of Claims 1 to 13 are first mixed in at least one mixer and the mixture, which is then in the form of a moulding composition, is either fed through at least one mixer outlet directly to further processing or is discharged in the form of a strand and cut into granules of a desired length by means of a granulator, and the compositions in the form of a moulding composition or granules are subjected to a shaping process.

16. Use of nepheline syenite for producing polyamide-based products.

## Revendications

1. Compositions contenant
A) du polyamide,
B) de la syénite à néphéline,
C) des fibres de verre et
D) du cyanurate de mélamine.

2. Compositions selon la revendication 1, **caractérisées en ce que** du polyamide 6 ou du polyamide 66 sont utilisés.

3. Compositions selon l'une quelconque des revendications 1 à 2, **caractérisées en ce que** de la syénite à néphéline présentant un d95 dans la plage de 1 à 150 µm, déterminé par diffractométrie au laser selon la norme ISO 13320, est utilisée.

4. Compositions selon l'une quelconque des revendications 1 à 3, **caractérisées en ce que** des fibres de verre longues présentant une longueur de départ dans la plage de 1 à 50 mm sont utilisées.

5. Compositions selon l'une quelconque des revendications 1 à 4, **caractérisées en ce qu'**elles contiennent 100 parties en poids du composant A), 10 à 75 parties en poids du composant B), 2 à 12 parties en poids du composant C) et 0,1 à 40 parties en poids du composant D).

6. Compositions selon l'une quelconque des revendications 1 à 5, **caractérisées en ce qu'**elles contiennent en outre encore E) du dioxyde de titane.

7. Compositions selon l'une quelconque des revendications 1 à 6, **caractérisées en ce qu'**elles contiennent, en plus des composants A) à E) ou au lieu de E), encore F) au moins un agent lubrifiant et/ou de démoulage.

8. Compositions selon l'une quelconque des revendications 1 à 7, **caractérisées en ce qu'**elles contiennent, en plus des composants A) à F) ou au lieu de E et/ou de F), encore G) au moins un absorbant de rayon laser choisi dans le groupe formé par le trioxyde d'antimoine, l'oxyde d'étain, l'orthophosphate d'étain, le titanate de baryum, l'oxyde d'aluminium, l'hydroxyphosphate de cuivre, l'orthophosphate de cuivre, le diphosphate de potassium et de cuivre, l'hydroxyde de cuivre, l'oxyde d'antimoine-étain, le trioxyde de bismuth et l'anthraquinone.

9. Compositions selon l'une quelconque des revendications 1 à 8, **caractérisées en ce qu'**elles contiennent, en plus des composants A) à G) ou au lieu de E) et/ou de F) et/ou de G), encore H) au moins autre agent ignifuge différent du cyanurate de mélamine.

10. Compositions selon l'une quelconque des revendications 1 à 9, **caractérisées en ce qu'**on utilise, comme composant H), des agents ignifuges exempts d'halogène et/ou exempts de phosphore.

11. Compositions selon l'une quelconque des revendications 1 à 10, **caractérisées en ce qu'**elles contiennent, en plus des composants A) à H) ou au lieu de E) et/ou de F) et/ou de G) et/ou de H), encore au moins une charge différente des composants B) et C) en tant que composant K).

12. Compositions selon l'une quelconque des revendications 3 à 11, **caractérisées en ce que** la syénite à néphéline présente une grosseur moyenne de particule (d50) dans la plage de 1 µm à 35 µm, déterminée par diffractométrie au laser selon la norme ISO 13320.

13. Compositions selon l'une quelconque des revendications 1 à 12, **caractérisées en ce que** la syénite à néphéline présente une forme particulaire, non cylindrique et un rapport longueur à épaisseur inférieur à 5.

14. Masses de moulage et objets à produire à partir de celles-ci, **caractérisés en ce qu'**ils contiennent au moins une composition selon l'une quelconque des revendications 1 à 13.

15. Procédé pour la fabrication d'objets, **caractérisé en ce qu'**on mélange d'abord les composants des compositions selon l'une quelconque des revendications 1 à 13 dans au moins un outil de mélange et on introduit ensuite ce mélange se trouvant sous forme de masse de moulage via au moins une sortie de l'outil de mélange, soit dans la transformation ultérieure directe, soit on le sort sous forme de brin et on le découpe au moyen d'un granulateur en granulats de longueur souhaitée et on soumet les compositions se trouvant sous forme de masse de moulage ou de granulat à un procédé de façonnage.

16. Utilisation de la syénite à néphéline pour la fabrication d'objets à base de polyamide.
